# EUROPEAN PATENT SPECIFICATION

(11) **EP 1 356 994 B1**
(45) Date of publication and mention of the grant of the patent: **21.09.2005**
(21) Application number: 02076584.8
(22) Date of filing: 19.04.2002
(51) Int. Cl.: B60R 7/00, B60R 21/06

(54) **Retaining hook for a safety net of a vehicle**
Befestigungshaken für ein Sicherheitsnetz eines Kraftfahrzeuges
Crochet d'un filet de sécurité pour un véhicule

(43) Date of publication of application: 29.10.2003
(73) Proprietor: Ford Global Technologies, Inc., Michigan 48126 (US)
(72) Inventor: Vernersson, Kristian, 417 26 Göteborg (SE)
(74) Representative: Hammond, Andrew David

(56) References cited:
- EP-A- 0 642 955
- US-A- 6 099 222
- PATENT ABSTRACTS OF JAPAN vol. 2000, no. 10, 17 November 2000 (2000-11-17) -& JP 2000 185600 A (ASHIMORI IND CO LTD), 4 July 2000 (2000-07-04)

## Description

### TECHNICAL FIELD:

The present invention relates to a retaining hook for a luggage retaining net in a vehicle. The invention further relates to a luggage retaining net comprising such a retaining hook, as well as to a vehicle comprising such a luggage retaining net.

### BACKGROUND OF THE INVENTION:

It is known to provide vehicles such as station wagons or sports utility vehicles with a luggage retaining net arrangement which separates the luggage bay from the passenger compartment. Such arrangements include mountings in the vehicle to support the luggage retaining net when in use. As well as preventing any animal which may be transported in the luggage bay from climbing or jumping into the passenger compartment, the luggage retaining net arrangement is also intended to prevent objects in general from being thrown into the passenger compartment in the event of the vehicle being involved in an accident. Particularly in the case of a head-on collision, the vehicle is subjected to a violent deceleration. This implies that the luggage retaining net and its mountings must be able to withstand the high forces which are imparted on them by loose objects in the luggage bay.

German patent DE-C-197 30 801 discloses a safety net arrangement in which the net is suspended at its upper edge from roof mountings in the vehicle. The lower edge of the net is releasably attached to mountings on the backrest of the rear seat of the vehicle by means of a pair of resilient retaining hooks. Each hook comprises an elastically extensible element, one end of which is attached to the safety net. A strip of non-extensible material, for example a textile belt, having a length greater than that of the non-tensioned elastically extensible element is affixed to both ends of the elastically extensible element. The amount by which the elastically extensible element can extend is limited to the difference in length between the non-extensible material strip and the non-tensioned length of the elastically extensible element. In the event of an object in the luggage bay being hurled against the safety net, the elastically extensible element extends until it reaches the length of the non-extensible material strip. In this manner, the mountings on the backrest of the rear seat are subjected to a reduced initial shock loading.

The upper edge of the safety net arrangement of DE-C-197 30 801 is carried by a strut arrangement extending between a pair of mountings located in the vicinity of the C-posts of the vehicle. The strut arrangement is said to comprise energy absorbing elements. An energy absorbing strut arrangement is described in U.S. Patent No. 5,551,726. In order to absorb kinetic energy to which a safety net system is subjected during a collision, the strut arrangement of U.S. Patent No. 5,551,726 includes a deformation structure. The deformation structure is in the form of a tubular body within a tubular housing. Each end of the tubular housing is provided with an engagement shaft which passes through the deformation structure. The remote end of each engagement shaft has a coupling member for attachment to the respective mounting in the vehicle. Upon impingement of an object against the safety net, the engagement shafts will withdraw into the deformation bodies, causing deformation thereof and thereby absorbing kinetic energy.

Due to the seating arrangement in some vehicles, it may not be suitable or possible to attach the lower edge of a luggage retaining net to the backrest of the rear seat. Many vehicles are nowadays fitted with load rings in the floor of the luggage bay. Such load rings may be used to tie down objects in the luggage bay, or to act as anchoring points for an elasticised cargo net which covers items in the luggage bay. Although sufficiently strong to retain objects which are secured in this manner to the floor of the luggage bay, these load rings are not necessarily strong enough to be used as mountings for a luggage retaining net. This is quite simply because, in the event of a collision, objects which are thrown against a luggage retaining net possess much greater kinetic energy than the same objects tied down to the luggage bay floor. Nevertheless, in terms of costs and ease of manufacture, it would be advantageous if such load rings could be used as mountings for a luggage retaining net.

A further energy absorbing arrangement for use with a luggage retaining net is described in EP-A-0 642 955. The energy absorbing arrangement of the Fig. 3 embodiment of EP-A-0 642 955 comprises a stiff unitary strip of material such as steel. An opening is made in the strip by providing a slit and then subjecting the strip to longitudinal compression to cause the strip to expand transversely. In use, should the strip be subjected to a sufficiently high force, the strip undergoes plastic deformation such that the opening is forced to contract in the transverse direction, thereby absorbing kinetic energy.

### SUMMARY OF THE INVENTION:

It is therefore an object of the present invention to provide a retaining hook for a luggage retaining net, which retaining hook is simple to manufacture and which, if desired, allows standard luggage bay load rings to be used as mountings for a luggage retaining net without compromising safety.

This object is achieved by a retaining hook for a luggage retaining net in a vehicle, the retaining hook comprising a body portion having an extension along a longitudinal axis. The body portion has a first end portion adapted to be attached to the luggage retaining net and a second end portion adapted to engage a mounting affixed to the vehicle.
The body portion is unitary and in the form of an elongate rod adapted to undergo controlled plastic deformation when acted upon by a force having a magnitude greater than a predetermined value to thereby reduce the amount of energy to which the mounting is subjected in use. The controlled plastic deformation is attained by an increase in the extension of the body portion along the longitudinal axis. To this effect, the rod constituting the body portion of the retaining hook exhibits a plurality of regions which are angled with respect to the longitudinal axis of the retaining hook.

The invention also provides for a luggage retaining net comprising at least one of the retaining hooks described above. In order to facilitate mounting of the luggage retaining net in a vehicle, the retaining hook may be provided with an adjuster assembly, for example in the form of a rotatable knob, to vary the length of the retaining hook.

Further preferred embodiments of the invention are detailed in the dependent claims.

### DEFINITIONS:

In the following, the expression "unitary" means that the body portion is made in one piece. The expression "controlled plastic deformation" means that the body portion is designed such that a predetermined degree of deformation will occur for a given applied force.

### BRIEF DESCRIPTION OF THE DRAWINGS:

The invention will be described in the following by way of example only and with reference to the attached drawings, in which
- Fig. 1: is a schematic perspective view of a luggage retaining net of the present invention mounted in a vehicle;
- Fig. 2: is a schematic elevation view of the luggage retaining net illustrated in Fig. 1;
- Fig. 3: is a schematic perspective view of a retaining hook according to one embodiment of the present invention; and
- Fig. 4: is a schematic cross-sectional view along line IV-IV of Fig. 3.

### DETAILED DESCRIPTION OF PREFERRED EMBODIMENTS:

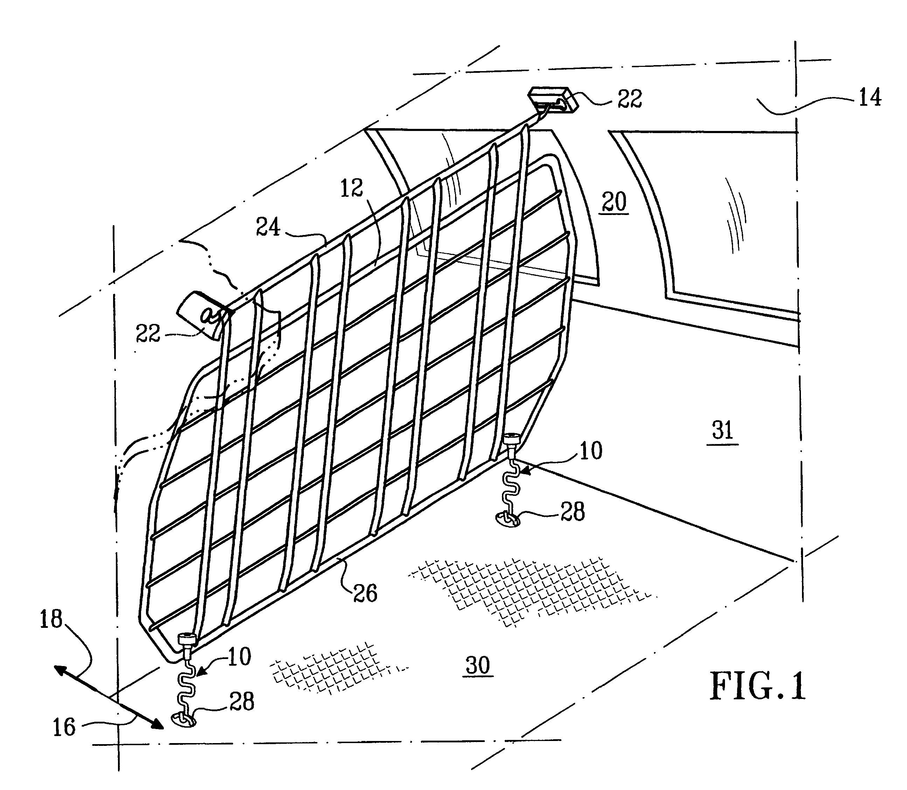

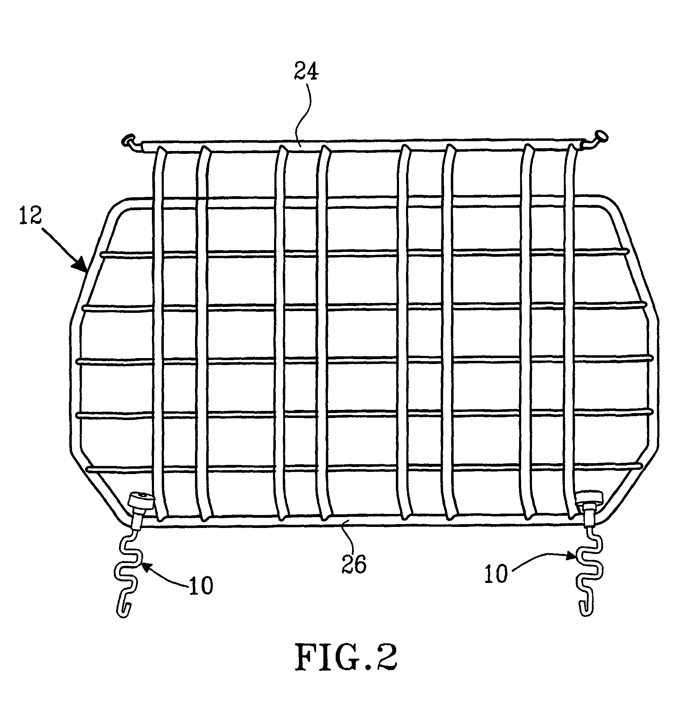

In the drawings, reference numeral 10 generally denotes a retaining hook according to the present invention. With particular reference to Figs. 1 and 2, the retaining hook 10 is intended to be used to secure a luggage retaining net 12 in a vehicle 14. As is conventional practice, the vehicle 14 has a luggage bay 16 and a passenger compartment 18 forward of the luggage bay. The vehicle also comprises a pair of C-posts 20 (only one of which is illustrated in Fig. 1) generally in the vicinity of a boundary between the luggage bay 16 and the passenger compartment 18. A pair of upper mountings 22 is associated with the C-posts 20 and, in a conventional manner, serves to locate a transverse rail 24 forming an upper edge of the luggage retaining net 12.

In the illustrated embodiment, the luggage retaining net 12 is constituted by a plurality of metal bars to form a substantially rigid framework. It is to be understood, however, that the principles of the present invention may be applied to luggage retaining nets of any conventional material and construction.

The luggage retaining net 12 has a lower edge 26 extending substantially parallel to the upper edge 24. The lower edge 26 is, in the illustrated embodiment, provided with a pair of retaining hooks 10 of the present invention. In a manner which will be described in greater detail in the following, each retaining hook 10 is intended to engage a mounting 28 in the vehicle. Preferably, such mountings 28 are constituted by load rings in the floor 30 of the luggage bay 16. Of course, it is to be understood that the load rings 28 may also be incorporated in side walls 31 of the luggage bay.

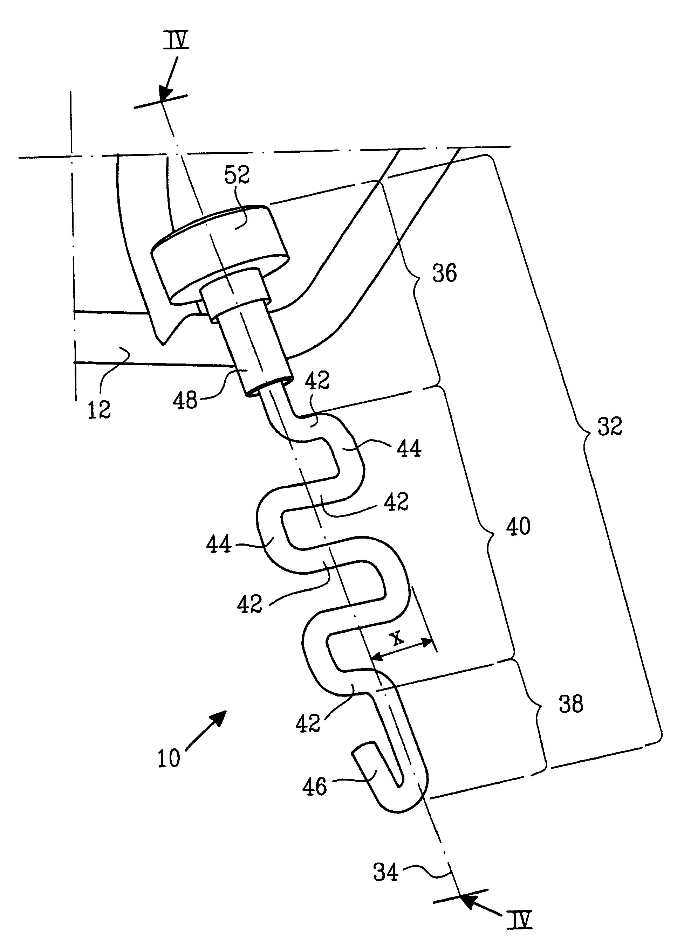

The retaining hook 10 of the present invention is illustrated in greater detail in Fig. 3. The hook comprises a body portion 32 having an extension along a longitudinal axis 34. The body portion 32 includes a first end portion 36 which is adapted to be attached to the luggage retaining net 12. It is to be understood that the term "attached" is intended to encompass situations in which the first end portion is adapted to be directly fixed to the luggage retaining net, i.e. without any intermediate member, and situations in which the first end portion is adapted to be indirectly fixed to the luggage retaining net, i.e. via one or more intermediate members. The body portion 32 further includes a second end portion 38 remote from the first end portion, which second end portion is adapted to engage a mounting, for example the load ring 28 of Fig. 1, affixed to a vehicle.

In accordance with the present invention, the body portion 32 of the retaining hook 10 is unitary and in the form of an elongate rod adapted to undergo controlled plastic deformation when acted upon by a force having a magnitude greater than a predetermined value. In this manner, the retaining hook absorbs at least some of the energy which otherwise would be transmitted directly to the mounting 28.

The controlled plastic deformation is attained by an increase in the extension of the body portion 32 along the longitudinal axis 34. This may be achieved by providing the body portion 32 in the form of a rod of a suitable material such as steel. A preferred steel is 1312-00, STD 1113.12. The rod may typically have a diameter of 7.9 ± 0.3 mm and a total, i.e. unbent, length of about 420 mm. At the first end portion 36, the rod is coaxial with the longitudinal axis 34. In an intermediate portion 40 between the first and second end portions, the rod exhibits at least two regions 42 which are angled with respect to the longitudinal axis 34. These at least two regions 42 are preferably substantially perpendicular to the longitudinal axis, though it is to be understood that energy absorbing plastic deformation of the retaining hook will be attainable even if the angle subtended by these regions 42 is less than or greater than 90°. Indeed, it is conceivable that the intermediate portion 40 of the body portion 32 be constituted by a continuously curved length of rod forming one or more "S"-like shapes.

In order to provide a compact arrangement of the retaining hook 10, yet still maintaining its energy absorbing capability, it is advantageous if the number of angled regions 42 is at least three, preferably four and most preferably five. The angled regions 42 may be linked by intermediate regions 44 of the rod extending substantially parallel to the longitudinal axis 34. These intermediate regions each have a point or a surface which defines a maximum distance x of any part of the body portion 32 from the longitudinal axis 34. The maximum distance x may generally lie between about 10 mm and about 40 mm, preferably between about 20 mm and about 30 mm, though is most preferably about 25 mm. As such, in its most preferred form, the retaining hook could be accommodated in a tube having a 50 mm internal bore. Spacing of the angled regions 42 will depend on the number and orientation of such regions. For the case in which the angled regions extend substantially perpendicular to the longitudinal axis, the spacing may typically lie between 10 mm and 20 mm, with about 14.5 mm distance between facing parallel surfaces being preferred.

So as to be able to engage a mounting, the second end portion 38 of the body portion 32 of the retaining hook can be formed by bending a length of said body portion back on itself to create a hook element 46. In a not-shown embodiment, the hook element may be provided with a resilient elastic coating or cover to minimise rattling and/or damage in use. Alternatively, the hook element 46 may be provided by a separate component attached in a suitable force-transmitting manner to the body portion 32.

As a consequence of the provision of the angled regions 42, in its most preferred form the retaining hook of the present invention occupies a length of about 235 mm. Such a hook is capable of extending by some 150 mm when subjected to axial forces sufficient to cause plastic deformation.

For ease of manufacture, the body portion 32 of the retaining hook has a substantially constant cross-section. Nevertheless, in order to adjust the location and rate of plastic deformation of the retaining hook, it is conceivable that the body portion 32 be provided with one or more regions of differing thickness.

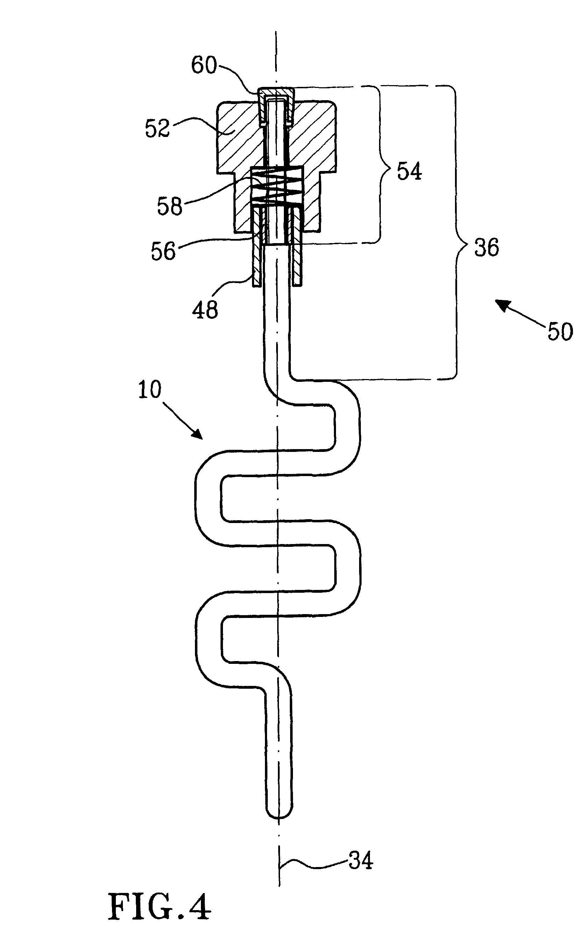

As is illustrated in Figs. 3 and 4, the first end portion 36 of the body portion 32 of the retaining hook 10 is accommodated in a cylindrical sleeve 48. The sleeve 48 is adapted to be attached to the luggage retaining net 12, for example by welding. A distance is defined between the sleeve 48 and the second end portion 38 of the body portion. This distance may be made variable by providing the retaining hook 10 with an adjuster assembly, generally denoted by 50. Advantageously, the adjuster assembly comprises a rotatable knob 52 arranged for rotation along a threaded length 54 of the first end region 36 of the body portion 32 of the retaining hook. A bushing 56, preferably of a plastics material, is secured for example by an adhesive within the sleeve 48 to support a length of the first end region 36. A biasing spring 58 may also be included between the bushing 56 and the knob 52. Finally, the remote end of the first end portion may be provided with a cover cap 60. Due to the provision of the adjuster assembly, the retaining hook can be manually tightened to thereby minimise the occurrence of rattling when in use.

The functioning of the retaining hook 10 of the present invention will be described in the following with reference to a non-limiting application in the vehicle 14 illustrated in Fig. 1.

The luggage retaining net 12 comprising a pair of retaining hooks 10 situated along the lower edge 26 of the net is mounted in the vehicle 14 by initially slackening off the adjuster assemblies 50 of the retaining hooks 10. The hook element 46 of each retaining hook is engaged in the respective load ring 28 in the floor 30 of the luggage bay 16. The transverse rail 24 of the luggage retaining net 12 is then affixed between the upper mountings 22 on the C-posts 20 of the vehicle. Each retaining hook 10 is thereafter tightened by rotating its knob 52. The luggage retaining net is now securely mounted in the vehicle.

In the event of an accident, such as a head-on collision, any object in the luggage bay 16 will tend to be hurled against the luggage retaining net 12. The kinetic energy of the object will be transferred via the net to the retaining hooks 10. Assuming that the mass of the object and its velocity are sufficient to generate a force having a magnitude greater than a predetermined value for the body portion 32 of the retaining hook, the body portion will undergo plastic deformation. Accordingly, the angled regions 42 tend to straighten out to become closer to parallel to the longitudinal axis 34. In this manner, a quantity of the kinetic energy is converted into work for deforming the body portion 32. The degree of straightening out will of course be dependent on the force of impact of the object on the luggage retaining net and the material, diameter and initial shape of the body portion 32. Nevertheless, it will be possible to design a retaining hook which extends a predetermined amount for a given applied force. In this manner, the forces acting on the load rings 28 can be reduced to acceptable levels, thereby obviating the need to reinforce the load rings themselves.

The invention has been described above by way of example only and it is to be understood that the invention may be varied in many ways within the scope of the appended claims. For example, retaining hooks may also be deployed along the upper edge 24 of the luggage retaining net. Furthermore, the adjuster assembly 50 of the retaining hook may comprise a ratchet mechanism. The body portion 32 may be designed to undergo non-linear progressive deformation, for example to initially undergo a relatively greater amount of deformation for a relatively low force and subsequently to undergo a relatively lesser amount of deformation for an increasing force. This could be achieved by providing angled regions of the rod with differing lengths in a direction transverse to the longitudinal axis.

## Claims

1. A retaining hook (10) for a luggage retaining net (12) in a vehicle (14), said retaining hook comprising a unitary body portion (32) having an extension along a longitudinal axis (34), said body portion having a first end portion (36) adapted to be attached to said luggage retaining net (12) and a second end portion (38) adapted to engage a mounting (28) affixed to said vehicle, said unitary body portion being adapted to undergo controlled plastic deformation when acted upon by a force having a magnitude greater than a predetermined value to thereby reduce the amount of energy to which said mounting (28) is subjected in use, said controlled plastic deformation being attained by an increase in the extension of said body portion (32) along said longitudinal axis (34),
**characterized in that** said body portion (32) is in the form of an elongate rod, said elongate rod being coaxial with said longitudinal axis (34) at said first end portion (36) and angled with respect to said longitudinal axis in at least two regions (42) between said first end portion and said second end portion (38).

2. The retaining hook as claimed in claim 1, wherein said at least two regions (42) are substantially perpendicular to said longitudinal axis (34).

3. The retaining hook as claimed in claim 2, wherein said at least two regions (42) are at least three, preferably four and most preferably five, in number.

4. The retaining hook as claimed in claim 2 or 3, wherein said at least two regions (42) are separated by an intermediate region (44) of said rod extending substantially parallel to said longitudinal axis (34).

5. The retaining hook as claimed in any one of the preceding claims, wherein said second end portion (38) of said body portion is formed by bending a length of said body portion back on itself to form a hook element (46).

6. The retaining hook as claimed in any one of the preceding claims, wherein said body portion (32) has a substantially constant cross-section.

7. The retaining hook as claimed in any one of claims 1 to 5, wherein said body portion (32) has regions of differing thickness.

8. The retaining hook as claimed in any of the preceding claims, wherein said first end portion (36) of said body portion is accommodated in a cylindrical sleeve (48) such that a distance is defined between said sleeve and said second end portion (38) of said body portion, said sleeve being adapted to be attached to said luggage retaining net (12).

9. The retaining hook as claimed in claim 8, wherein said retaining hook further comprises an adjuster assembly (50) arranged to co-operate with said cylindrical sleeve (48) to vary said distance between said sleeve and said second end portion (38).

10. The retaining hook as claimed in claim 9, wherein said adjuster assembly (50) is provided with a rotatable knob (52) for manual actuation.

11. A luggage retaining net (12) comprising at least one retaining hook (10) as claimed in any one of the preceding claims.

12. The luggage retaining net as claimed in claim 11, comprising two retaining hooks (10) situated along a lower edge (26) of said net, said mounting (28) affixed to said vehicle being in the form of a pair of load rings in a luggage bay (16) in said vehicle.

13. A vehicle comprising the luggage retaining net (12) as claimed in claim 11 or 12.

## Patentansprüche

1. Befestigungshaken (10) für ein Gepäckrückhaltenetz (12) in einem Fahrzeug (14), wobei der Befestigungshaken (10) ein einheitliches Körperteil (32) aufweist, das entlang einer Längsachse (34) eine Verlängerung besitzt,
wobei das Körperteil (32) einen ersten Endabschnitt (36) zur Anbringung am Gepäckrückhaltenetz (12) und einen zweiten Endabschnitt (38) aufweist, der zum Greifen einer am Fahrzeug fixierten Halterung (28) vorgesehen ist,
wobei das einheitliche Körperteil einer gesteuerten plastischen Deformation ausgesetzt wird, wenn auf das Körperteil eine Kraft ausgeübt wird, deren Amplitude größer ist als ein vorgegebener Wert, um hierdurch den Energiebetrag zu reduzieren, dem die Halterung (28) bei der Verwendung ausgesetzt ist, wobei die gesteuerte plastische Deformation durch eine Vergrößerung der Länge des Körperteils (32) entlang der Längsachse (34) erreicht wird,
**dadurch gekennzeichnet,**
**dass** das Körperteil (32) die Gestalt einer länglichen Stange besitzt, wobei die längliche Stange am ersten Endabschnitt zur-Längsachse (34) koaxial und an mindestens zwei Bereichen (42) zwischen dem ersten Endabschnitt und dem zweiten Endabschnitt (38) in Bezug zur Längsachse abgewinkelt ist.

2. Befestigungshaken nach Anspruch 1,
wobei die mindestens zwei Bereiche (42) im wesentlichen senkrecht zur Längsachse (34) sind.

3. Befestigungshaken nach Anspruch 2;
wobei die mindestens zwei Bereiche (42) mindestens drei, vorzugsweise vier, oder weiter bevorzugt fünf an der Zahl sind.

4. Befestigungshaken nach Anspruch 2 oder 3,
wobei die mindestens zwei Bereiche (42) voneinander durch einen Zwischenbereich (44) der Stange beabstandet sind, der sich im wesentlichen parallel zur Längsachse (34) erstreckt.

5. Befestigungshaken nach einem der vorhergehenden Ansprüche,
wobei der zweite Endabschnitt (38) des Körperteils durch Zurückbiegen eines Längenabschnittes des Körperteils selbst gebildet ist, um ein Hakenelement (46) zu bilden.

6. Befestigungshaken nach einem der vorhergehenden Ansprüche,
wobei das Körperteil (32) einen im wesentlichen konstanten Querschnitt besitzt.

7. Befestigungshaken nach einem der Ansprüche 1 bis 5,
wobei das Körperteil (32) Bereiche unterschiedlicher Dicke besitzt.

8. Befestigungshaken nach einem der vorhergehenden Ansprüche,
wobei der erste Endabschnitt (36) des Körperteils in einer zylindrischen Hülse (48) untergebracht ist, so dass zwischen der Hülse und dem zweiten Endabschnitt (38) des Körperteils ein Abstand bestimmt ist, wobei die Hülse zur Anbringung am Gepäckrückhaltenetz (12) geeignet ist.

9. Befestigungshaken nach Anspruch 8,
wobei der Befestigungshaken außerdem eine Einstelleinrichtung (50) aufweist, die mit der zylindrischen Hülse (48) zusammenwirkt, um den Abstand zwischen der Hülse und dem zweiten Endabschnitt (38) zu verändern.

10. Befestigungshaken nach Anspruch 9,
wobei die Einstelleinrichtung (50) zur manuellen Betätigung mit einem Drehknopf (52) versehen ist.

11. Gepäckrückhaltenetz (12), das mindestens einen Befestigungshaken (10) gemäß einem der vorhergehenden Ansprüche aufweist.

12. Gepäckrückhaltenetz (12) nach Anspruch 11,
das zwei Befestigungshaken (10) aufweist, die entlang eines Unterrandes (26) des Netzes angeordnet sind, wobei die am Fahrzeug fixierte Halterung (28) von einem Paar Lastringe in einem Gepäckabteil (16) im Fahrzeug gebildet ist.

13. Fahrzeug, das ein Gepäckrückhaltenetz (12) gemäß Anspruch 11 oder 12 aufweist.

## Revendications

1. Un crochet de retenue (10) utilisé pour un filet de retenue de bagages (12) dans un véhicule (14), ledit crochet de retenue comprenant une partie corps unitaire (32) dotée d'un prolongement le long d'un axe longitudinal (34), ladite partie corps présentant une première extrémité (36) adaptée pour pouvoir être attachée au dit filet de retenue de bagages (12) et une seconde extrémité (38) adaptée pour pouvoir s'engager sur un support (28) fixé au dit véhicule, ladite partie corps unitaire étant adaptée pour pouvoir supporter une déformation plastique contrôlée lorsqu'elle est soumise à une force d'une magnitude supérieure à une valeur prédéterminée afin de réduire ainsi la quantité d'énergie à laquelle ledit support (28) est soumis pendant l'utilisation, ladite déformation plastique contrôlée étant atteinte par une augmentation de l'extension de ladite partie corps (32) le long dudit axe longitudinal (34) ;
**caractérisé par le fait que** ladite partie corps (32) se présente sous la forme d'une tige allongée, ladite tige allongée étant coaxiale avec ledit axe longitudinal (34) au niveau de ladite première extrémité (36) et forme un angle par rapport au dit axe longitudinal dans au moins deux zones (42) situées entre ladite première extrémité et ladite seconde extrémité (38).

2. Le crochet de retenue de la revendication 1, dans lequel au moins deux zones (42) sont perpendiculaires au dit axe longitudinal (34)

3. Le crochet de retenue de la revendication 2, dans lequel lesdites au moins deux zones (42) sont au nombre d'au moins trois, de préférence quatre et encore mieux cinq.

4. Le crochet de retenue décrit dans les revendications 2 ou 3, dans lequel au moins deux zones (42) sont séparées par une zone intermédiaire (44) de ladite tige se prolongeant parallèlement au dit axe longitudinal (34).

5. Le crochet de retenue tel que décrit dans l'une des revendications précédentes, dans lequel ladite seconde extrémité (38) de ladite partie corps est formée en recourbant une longueur de ladite partie corps sur elle-même afin de former un élément crochet (46).

6. Le crochet de retenue tel que décrit dans l'une des revendications précédentes, dans lequel ladite partie corps (32) présente une coupe transversale régulière.

7. Le crochet de retenue tel que décrit dans l'une des revendications 1 à 5, dans lequel ladite partie corps (32) présente des zones d'une épaisseur différente.

8. Le crochet de retenue tel que décrit dans l'une des revendications précédentes, dans lequel ladite première extrémité (36) de ladite partie corps est logée dans un manchon cylindrique (48) de façon qu'une distance soit définie entre ledit manchon et ladite seconde extrémité (38) de ladite partie corps, ledit manchon étant adapté pour être fixé au filet de retenue des bagages (12).

9. Le crochet de retenue tel que décrit dans la revendication 8, dans lequel ledit crochet de retenue comprend également un ensemble de réglage (50) disposé de façon à fonctionner avec ledit manchon cylindrique (48) pour faire varier ladite distance entre ledit manchon et ladite seconde extrémité (38).

10. Le crochet de retenue tel que décrit dans la revendication 9, dans lequel ledit ensemble de réglage (50) est doté d'un bouton tournant (52) pour être actionné manuellement.

11. Un filet de retenue de bagages (12), comprenant au moins un crochet de retenue (10) comme décrit dans l'une des revendications précédentes.

12. Le filet de retenue de bagages tel que décrit dans la revendication 11, comprenant deux crochets de retenue (10) placés le long du bord inférieur (26) dudit filet, ledit support (28) fixé sur ledit véhicule ayant la forme d'une paire d'anneaux de suspension dans un coffre à bagages (16) dans ledit véhicule.

13. Un véhicule comprenant un filet de retenue de bagages (12) tel que revendiqué dans les revendications 11 ou 12.
